Europäisches Patentamt

European Patent Office

Office européen des brevets

(19)

(11) Veröffentlichungsnummer: **0 128 487 B2**

(12) # NEUE EUROPÄISCHE PATENTSCHRIFT

(45) Veröffentlichungstag der neuen Patentschrift:
27.02.91 Patentblatt 91/09

(51) Int. Cl.⁵: **B25J 15/00, B26F 1/38,**
   **B23Q 3/155**

(21) Anmeldenummer: 84106293.8

(22) Anmeldetag: 01.06.84

(54) **Werkzeugmaschine mit einem stationären Magazin.**

(30) Priorität: 09.06.83 DE 3320762

(43) Veröffentlichungstag der Anmeldung:
19.12.84 Patentblatt 84/51

(45) Bekanntmachung des Hinweises auf die
Patenterteilung:
29.07.87 Patentblatt 87/31

(45) Bekanntmachung des Hinweises auf die
Entscheidung über den Einspruch:
27.02.91 Patentblatt 91/09

(84) Benannte Vertragsstaaten:
**CH FR GB IT LI SE**

(56) Entgegenhaltungen:
**DE-A- 2 740 042**

(56) Entgegenhaltungen:
**DE-A- 2 847 473**
**GB-A- 1 569 348**
**US-A- 3 371 953**
**US-A- 4 037 730**
**US-A- 4 164 290**
**US-A- 4 359 815**

(73) Patentinhaber: **Trumpf GmbH & Co**
**Postfach 1320 Johann-Maus-Strasse 2**
**D-7257 Ditzingen (DE)**

(72) Erfinder: **Bytow, Peter**
**Mozartstrasse 2**
**D-7261 Simmozheim (DE)**

(74) Vertreter: **Schmid, Berthold et al**
**Patentanwälte Dipl.-Ing. B. Schmid Dr. Ing. G.**
**Birn Dipl.-Phys. H. Quarder**
**Falbenhennenstrasse 17**
**D-7000 Stuttgart 1 (DE)**

EP 0 128 487 B2

## Beschreibung

Die Erfindung bezieht sich auf eine Werkzeugmaschine mit einem stationären Magazin und einer Übergabevorrichtung, die zwischen das Magazin und die Werkzeugmaschine geschaltet ist gemäß dem Oberbegriff des Anspruchs 1. Durch das US-Patent 4 359 815 ist eine derartige Werkzeugmaschine mit Magazin und Übergabevorrichtung bekannt geworden. Die Übergabevorrichtung besteht aus einem schwenkbar gelagerten Arm, der an seinem freien Ende einen gabelförmigen Greifer trägt. Mit seiner Hilfe können Werkstücke entsprechender Form, die jeweils in seinen Bewegungsbereich gebracht werden, von einem Tisch abgenommen und zum Arbeitstisch der Werkzeugmaschine gebracht werden und umgekehrt. Darüberhinaus kann man mit dieser Übergabevorrichtung von einem Magazin ein Werkzeug entnehmen und zur Werkzeughalterung der Werkzeugmaschine transportieren. Zuvor muß aber das in der Werkzeughalterung der Maschine befindliche Werkzeug geholt und im Magazin abgelegt werden. Der Werkzeugwechsel erfordert infolgedessen eine Bewegung des Greifers zur Werkzeughalterung, eine Entnahme des auszuwechselnden Werkzeugs, seine Verschwenkung zum Werkzeugmagazin hin und nach entsprechender Verstellung eines Kettenförderers mit dem bereitgehaltenen weiteren Werkzeugen eine Übernahme des nächsten, seine Schwenkbewegung zur Werkzeughalterung und die anschließende Übergabe in letztere.

Infolgedessen wird für den Werkzeugwechsel eine verhältnismäßig große Zeitspanne benötigt. Diese Wechselmethode gestattet noch nicht einmal, im Magazin das nächstfolgende Werkzeug in eine für die Übernahme geeignete Position zu bringen, weil zunächst das ankommende Werkzeug abgegeben und dann aus dem Übernahmebereich des Greifers verfahren werden muß, bis das nächstfolgende Werkzeug im Übernahmebereich ist.

Bei Stanzmaschinen kommt ein verhältnismäßig häufiger Werkzeugwechsel vor. Infolgedessen spielt dort die Werkzeug-Wechselzeit eine nicht untergeordnete Rolle.

Es ist zwar vorteilhaft, daß ein und dieselbe Übergabevorrichtung sowohl die Übergabe eines Werkzeugs von einer Stelle zur anderen und auch eines Werkstücks von einer Stelle zu einer anderen übernehmen kann, jedoch ist dies bei der vorbekannten Werkzeugmaschine mit dem Nachteil verbunden, daß ein und derselbe Greifer sowohl das Werkzeug als auch das Werkstück aufnehmen, transportieren und übergeben muß, und dies steht einer universellen Verwendung dieser Werkzeugmaschine mit Übergabevorrichtung im Wege.

Die Aufgabe der Erfindung besteht infolgedessen darin, eine Werkzeugmaschine mit einem stationären Werkzeugmagazin und einer zwischen dieses und die Werkzeugmaschine geschalteten Übergabevorrichtung so weiterzubilden, daß einerseits der Werkzeugwechsel beschleunigt und andererseits der Einsatzbereich der Übergabevorrichtung hinsichtlich Form und Größe des Transportguts universeller gestaltet werden kann.

Zur Lösung dieser Aufgabe wird erfindungsgemäß vorgeschlagen, daß die Werkzeugmaschine mit stationärem Magazin und Übergabevorrichtung zwischen beiden gemäß dem Oberbegriff des Anspruchs 1 entsprechend dem kennzeichnenden Teil dieses Anspruchs ausgebildet ist. Weil nunmehr der Greifer zwei steuerbare Klemmvorrichtungen aufweist, die ein rasches An- und Abkuppeln an jeweils einen Halter ermöglichen und die beispielsweise im Bereich der Werkzeughalterung rasch um die Drehachse des Greifers gedreht werden können, läßt sich mit Hilfe dieses Greifers und beispielsweise zwei von ihm klemmend gehaltenen Haltern bei Zuordnung des ersten Halters zur Werkzeughalterung das darin befindliche Werkzeug übernehmen, mittels einer Drehung aus dem Bereich der Werkzeughalterung herausnehmen, wobei gleichzeitig das einzuwechselnde Werkzeug in den Bereich der Werkzeughalterung gebracht wird. Erst nachdem das neue Werkzeug in die Werkzeughalterung eingewechselt worden ist, schwenkt man die Übergabevorrichtung zum Werkzeugmagazin hin und gibt dort das ausgewechselte Werkzeug ab. Während mit dem zweiten Werkzeug gearbeitet wird, kann von dem dem Magazin zugeordneten Halter das dritte Werkzeug übernommen und in eine Bereitschaftsstellung nahe der Werkzeughalterung transportiert werden. Anschließend wiederholt sich dann der geschilderte Zyklus. Damit kann die Bearbeitungszeit eines Werkstücks zur teilweisen Durchführung des Werkzeugwechsels ausgenützt werden, und dies führt dann in der angestrebten Weise zu einer verkürzten Werkzeug-Wechselzeit.

Weil die Halter mit Hilfe jeweils einer Klemmvorrichtung am Greifer gehalten werden, können sie sehr rasch angekuppelt, aber auch abgekuppelt werden. Nach dem Abkuppeln des oder der Halter für den Werkzeugwechsel sind die beiden Klemmvorrichtungen des Greifers frei, und sie können dann unverzüglich einen anderen Halter aufnehmen, der dem Werkstück gemäß, also beispielsweise einer zu stanzenden Platte gemäß, gestaltet und dimensioniert ist. Weil dieser Halter mittels zweier Klemmvorrichtungen festgehalten werden kann, läßt es sich wesentlich größer dimensionieren als ein im Vergleich dazu kleinerer Halter, welcher für den Transport eines Werkzeugs völlig ausreicht. Andererseits ermöglicht aber das schnelle Ankuppeln und Abkuppeln der verschiedenen Halter mit Hilfe mindestens zweier steuerbarer Klemmvorrichtungen die Verwendung unterschiedlichster Halter, und zwar sowohl hinsichtlich ihrer Form als auch ihrer Größe, weswegen diese Übergabevorrichtung sehr universell einsetzbar ist.

Durch die US-PS 3 371 953 ist zwar das An- und Abkuppeln eines Greifers grundsätzlich bekannt, jedoch handelt es sich dort nicht um eine Schnellkupplung, vielmehr wird die Verbindung mit Hilfe von vier Schrauben od. dgl. vorgenommen. Dieser Vorgang läßt sich weder rasch noch programmgesteuert durchführen.

Durch die DE-C 20 44 183 ist es bekanntgeworden, ein Bearbeitungswerkzeug aus einem Magazin zu entnehmen, mit Hilfe einer Übergabevorrichtung auf ein höheres Niveau zu bringen und mittels einer nachgeschalteten Wechselvorrichtung auf die endgültige Übergabehöhe zu transportieren. Die Wechselvorrichtung ermöglicht zwar auch eine Verkürzung der Wechselzeit, jedoch ist sie nur zum Wechsel der Bearbeitungswerkzeuge, nicht jedoch zu einem Transport von Werkstücken geeignet. Der Weg vom Magazin zur Werkzeugaufnahme der Werkzeugmaschine wird dort also in zwei Stufen zurückgelegt, und deshalb sind für die gesamte, vom Werkzeug zurückzulegende Wegstrecke auch zwei Vorrichtungen notwendig. Diese sind weder einzeln noch gemeinsam in der Lage, ein Werkstück zu transportieren.

Eine Weiterbildung der Erfindung sieht vor, daß die beiden Klemmvorrichtungen des Greifers nach entgegengesetzten Richtungen weisen, bezogen auf eine gedachte Ebene oder geometrische Achse. Zum Übergang von einem auf den anderen ist also auch eine Drehung um 180° notwendig. Andererseits kommen bei dieser 180°-Anordnung die beiden Klemmvorrichtungen auf einen maximal großen Abstand, so daß auch ein dementsprechend großer Halter für die Werkstücke aufgenommen werden kann.

In an sich bekannter Weise kann der Halter zur Aufnahme von einem oder mehreren Werkzeugen ausgebildet sein. Bei einer bevorzugten, für eine Stanz- oder Nibbelmaschine geeigneten Ausführungsform weist der Halter übereinander je eine Greifvorrichtung für einen Stempel und eine Matrize auf.

Eine Weiterbildung der Erfindung sieht vor, daß zur Vermeidung unnötiger Wege des Greifers die Werkzeuglagerplätze auf Kreisbögen um die Übergabevorrichtung angeordnet sind. Zur besseren Platzausnutzung ist es vorteilhaft, die Übergabevorrichtung höhenverstellbar auszubilden und zusätzlich die Werkzeuglagerplätze übereinander in mehreren Kreisbögen anzuordnen. Da es, wie bereits oben beschrieben, vorteilhaft ist, die Werkzeuge mit ihren Haltern zu lagern, sind die Werkzeuglagerplätze so dimensioniert, daß sie die Werkzeuge zusammen mit den jeweils zugehörigen Haltern aufnehmen können.

Bekannte Vorrichtungen haben, wie gesagt, den Nachteil, daß sie nur zum Auswechseln von Werkzeugen geeignet sind, während man für Be- und Entladung der Bearbeitungsmaschine mit einem Werkstück eine zusätzliche Vorrichtung benötigt. Eine Weiterbildung der Erfindung besteht darin, daß der Halter anstelle der Greifvorrichtungen mit Haltegliedern für ein Werkstück, insbesondere mit Magneten oder Saugern, versehen ist. Die Steuereinrichtung für die Greifvorrichtungen kann auch für die Halteglieder, nämlich die Sauger oder Magnete, verwendet werden, jedoch müssen diese mit einer Energiequelle verbunden werden. Hierzu sind vorzugsweise am Halter und am Greifer je ein Kupplungsstück vorgesehen.

Ebenso ist es zweckmäßig, die Dreheinstellung des Greifers mit den Klemmvorrichtungen um das Drehgelenk durch die Steuereinrichtung der Bearbeitungsmaschine zu steuern. Bei einer bevorzugten Ausführungsform wird ein Halter verwendet, welcher sowohl Werkzeug-Greifvorrichtungen als auch Werkstück-Halteglieder aufweist, wodurch sich die Fertigung der Halter vereinfacht.

Die Zeichnung zeigt Ausführungsbeispiele der Erfindung. Es stellen dar :

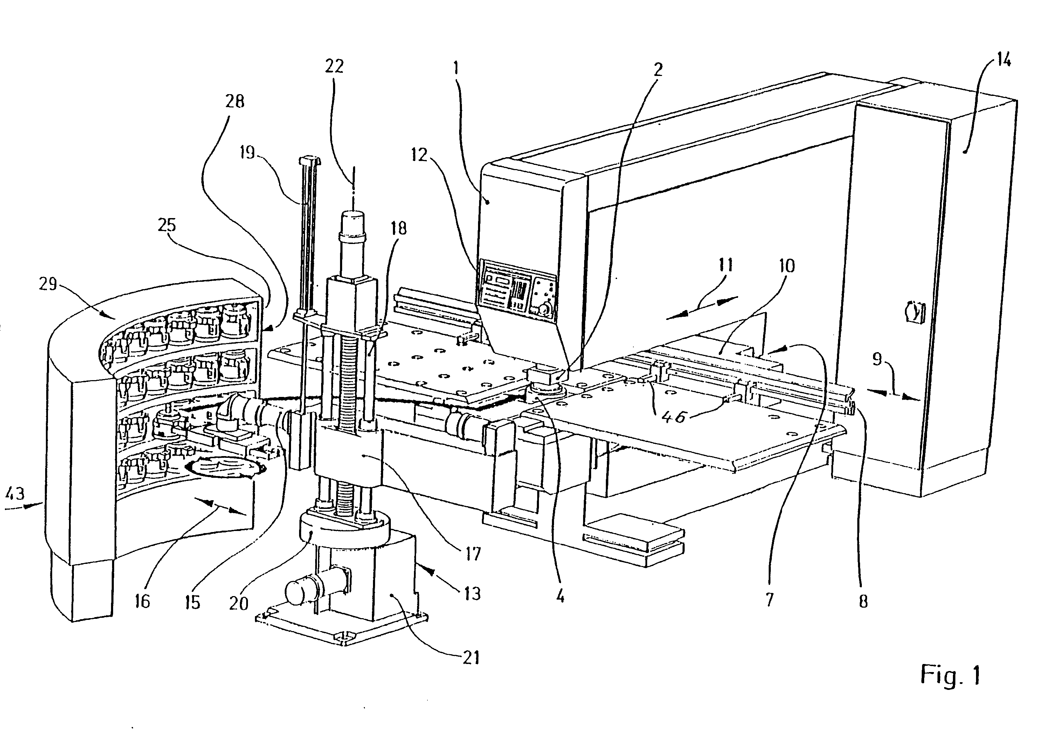

Figur 1 die Ansicht einer Übergabevorrichtung mit Bearbeitungsmaschine und Werkzeugmagazin,

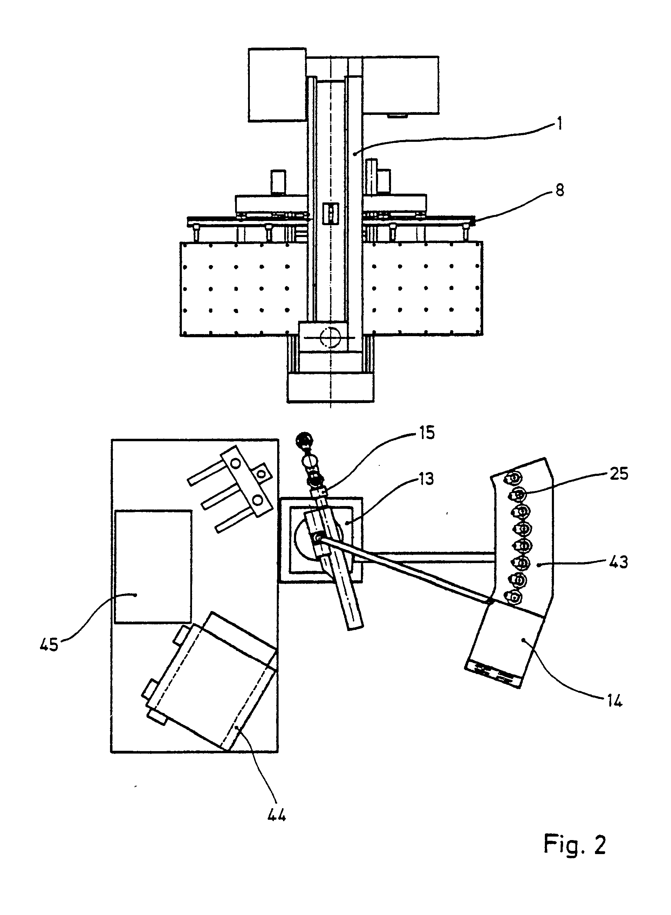

Figur 2 eine Draufsicht auf eine erweiterte Form der Ausführung nach Fig. 1,

Figur 3 eine vergrößerte, abgebrochene Ansicht des Armvorderteils mit Greifer,

Figur 4 eine Ansicht eines Halters für Werkzeuge,

Figur 5 eine der Fig. 3 entsprechende Darstellung einer abgewandelten Ausführungsform,

Figur 6 die Ansicht eines Halters für Werkstücke.

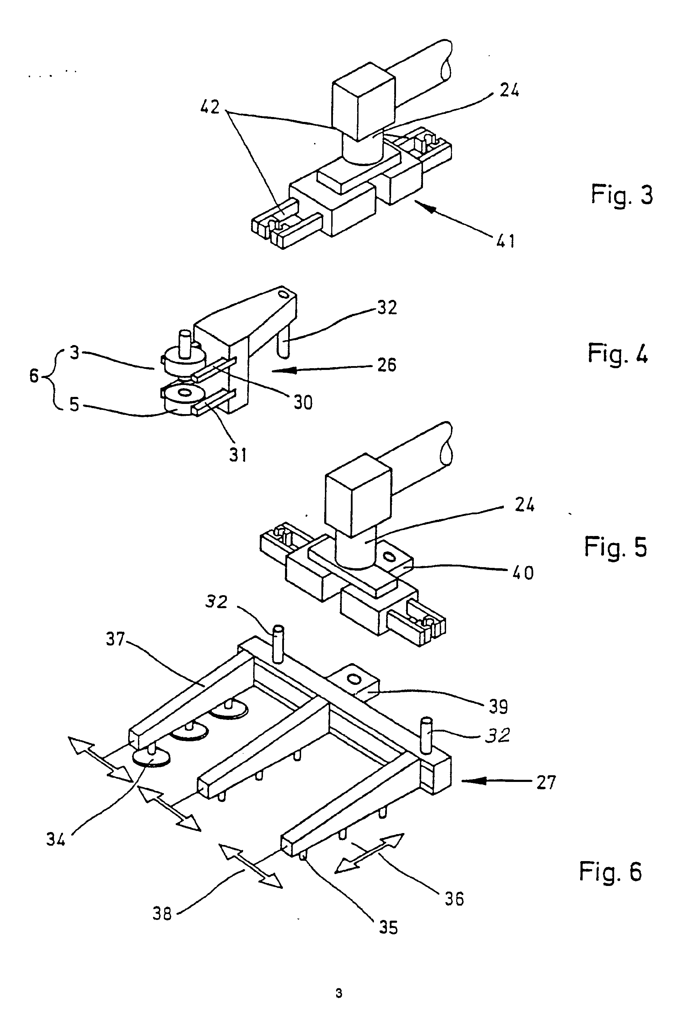

Die als Stanzmaschine 1 ausgebildete Werkzeugmaschine weist eine Werkzeughalterung 2 für den Stempel 3 und eine Werkzeughalterung 4 für die Matrize 5 auf. Der Stempel 3 und die Matrize 5 (Fig. 4) bilden das zweiteilige Werkzeug 6 der Stanzmaschine 1. Außerdem kann noch ein nicht dargestellter Abstreifer hinzukommen. An der Stanzmaschine ist eine Werkstückverschiebeeinrichtung 7 vorgesehen, die eine Querschiene 8 mit Werkstückhalterungen 46 aufweist, welche in Pfeilrichtung 9 gegenüber dem Koordinatenwagen 10 verschiebbar ist, wobei der Koordinatenwagen 10 seinerseits in Pfeilrichtung 11 verschiebbar gelagert ist. Die Werkstückverschiebeeinrichtung 7 wird durch die Steuereinrichtung 12 gesteuert.

Zum Wechseln der Werkzeuge 6 ist eine Übergabevorrichtung 13 vorgesehen. Sie weist einen in Pfeilrichtung 16 längsverschiebbaren Arm 15 auf. Dieser ist seinerseits an einem Grundkörper 17 gelagert, der in vertikaler Richtung an zwei Führungsstangen 18 durch eine Hubeinrichtung 19 in vertikaler Richtung bewegbar ist. Eine Führungseinrichtung 20 mit den Führungsstangen 18, der Hubeinrichtung 19 und dem Grundkörper 17 mit dem Arm 15 sind gegenüber dem Gestell 21 um die Achse 22 drehbar gelagert.

Die Werkzeuge 6 sind in einem Magazin 43 gelagert. Es weist mehrere übereinander angeordnete Reihen 28 von kreisbogenförmig angeordneten Werkzeuglagerplätzen 25 auf. Das Magazin 43 hat die Form eines Innenzylinderausschnittes 29. Auf den Werkzeuglagerplätzen 25 sind die Werkzeuge 6 in Haltern 26 gelagert. Jeder Halter 26 weist eine Greifvorrichtung 30 für einen Stempel 3 und eine Greifvorrichtung 31 für eine Matrize 5 auf. Außerdem befindet sich an ihm ein Halteorgan 32, mit dem der am freien Ende des Armes 15 angeordnete Greifer 41 mittels einer seiner beiden Klemmvorrichtungen 42 den Halter 26 fassen kann. Zwischen dem Greifer 41 und den Klemmvorrichtungen 42 ist ein Drehgelenk 24 angeordnet, so daß die Klemmvorrichtungen 42 mit dem Greifer 41 gegenüber dem Arm 15 verchwenkt werden können

Der in Fig. 6 dargestellte Halter 27 ist für den Transport von Werkstücken ausgebildet und bestimmt. Hierzu sind an einem Querträger Arme 37 verschiebbar gelagert, wobei sich am einen Arm Sauger 34 und an den beiden anderen Magnete 35 befinden können. Außerdem sind am Halter 27 und am Greifer 41 je ein Kupplungsstück 39 bzw. 40 vorgesehen, durch welche eine nicht dargestellte Energiequelle mit den Saugern 34 bzw. den Magneten 35 verbunden wird.

Der Wechselvorgang für die Werkzeuge 6 bzw. die Werkstücke läuft folgendermaßen ab : Über die an der Stanzmaschine 1 angeordnete Steuereinrichtung 14 wird die Führungseinrichtung 20 der Übergabevorrichtung 13 so weit um die Drehachse 22 geschwenkt, daß nach Verfahren des Armes 15 im Sinne des Doppelpfeils 16 der Greifer 41 das Werkzeug 6 zusammen mit seinem Halter 26 am Werkzeuglagerplatz 25 einer bestimmten Reihe 28 erfassen kann. Danach fährt der Arm 15 im Sinne des Doppelpfeils 16 zurück, schwenkt um die Drehachse 22 zur Stanzmaschine 1 und schiebt das Werkzeug 6 in Richtung des Doppelpfeils 11 mit dem Halter 26 in die Werkzeughalterung 2 und 4. In diesen Werkzeughalterungen 2 und 4 werden der Stempel 3 und die Matrize 5 durch nicht dargestellte Klemmeinrichtungen festgehalten. Der Halter 26 verbleibt ohne das Werkzeug 6 in der Klemmvorrichtung 42 des Greifers 41. Der Arm 15 wird dann in Richtung des Doppelpfeils 16 zurückgezogen und die Führungseinrichtung 20 wird um die Drehachse 22 wieder auf das Werkzeugmagazin 43 zurückgeschwenkt. Außerdem werden, ebenfalls durch die Steuereinrichtung 14, die Klemmvorrichtungen 42 durch das Drehgelenk 24 um 180° geschwenkt, so daß die freie Klemmvorrichtung 42 einen weiteren Halter 26 mit dem im Arbeitsablauf folgenden Werkzeug 6 aus dem Werkzeugmagazin 23 holen kann. Während dieses Abholvorgangs wird das Werkstück durch die Stanzmaschine 1 bearbeitet. Beim nächsten Werkzeugwechsel wird das Werkzeug 6 mit dem freien Halter 26 aus den Werkzeughalterungen 2 und 4 herausgeholt und das neue Werkzeug 6 nach einem erneuten Schwenken der Klemmvorrichtungen 42 um das Drehgelenk 24 in die Werkzeughalterungen 2 und 4 eingesetzt.

Nach Ablegen des Halters 26 für die Werkzeuge 6 kann der Greifer 41 den anderen Halter 27 für die Werkstücke mittels beider Klemmvorrichtungen 42 und der beiden Halteorgane 32 erfassen. Dabei greift das Kupplungsstück 39 des Halters 27 in das Kupplungsstück 40 des Greifers 41 ein, so daß eine nicht dargestellte Energiequelle, beispielsweise eine pneumatische Saugeinrichtung oder eine Stromquelle, mit den Saugern 34 bzw. den Magneten 35 verbunden wird. Die Führungseinrichtung 20 wird über die Steuereinrichtung 14 nunmehr über den Lagerplatz 44 für die Werkstückrohteile geschwenkt und der Grundkörper 17 durch die Hubeinrichtung 19 nach unten abgesenkt, bis der Halter 27 auf dem obersten Werkstück aufliegt. Anschließend werden über die Steuereinrichtung 14 die Sauger 34 bzw. die Magneten 35, nachdem die Arme 37 entsprechend eingestellt wurden, mit ihrer Energiequelle verbunden. Nun kann das Werkstück über die Hubeinrichtung angehoben und nach Drehung der Führungseinrichtung 20 und Ausfahren des Armes 15 in die Werkstückverschiebeeinrichtung 7 gebracht werden. Über die Steuereinrichtung 14 wird dann die Energiezufuhr zu den Saugern 34 bzw. den Magneten 35 wieder unterbrochen, so daß die Verbindung zwischen dem Werkstück und dem Halter 27 gelöst wird. Nach der Bearbeitung wird das Werkstück dann wieder vom Halter 27 erfaßt und nach Freigabe durch die Werkstückhalterung an der Werkstückverschiebeeinrichtung 7 auf den Lagerplatz 45 für fertige Werkstücke geschwenkt. Der Halter 27 kann dann an beliebiger Stelle abgelegt werden.

**Ansprüche**

1. Werkzeugmaschine mit einem stationären Magazin (43) für Werkzeuge und einer Übergabevorrichtung (13), die zwischen das Magazin und die Werkzeugmaschine geschaltet ist, wobei jedes Werkzeug (6) vom Magazin zu einer Werkzeughalterung (2, 4) der Werkzeugmaschine sowie umgekehrt transportierbar ist und dieser Werkzeugwechsel gesteuert abläuft, wobei außerdem die Werkzeugmaschine mit einer Werkstückhalterung (46) versehen ist und die Übergabevorrichtung (13) einen wenigstens um eine vertikale Achse (22) drehbaren, programmsteuerbaren Arm (15) aufweist, der an seinem freien Ende einen Greifer (41) trägt, welcher jeweils wahlweise dem Magazin (43) oder der Werkzeughalterung (2, 4) und mindestens einem Werkstücklagerplatz (44, 45) oder der Werkstückhalterung (46) zuordnenbar ist, dadurch gekennzeichnet, daß die Werkzeugmaschine eine Stanzmaschine ist und sich jedes Werkzeug (6) in einem Halter (26) befindet, daß außerdem der Greifer (41) am Arm (15) um eine zu dessen Drehachse (22) parallele Achse (24) drehbar ist sowie wenigstens zwei steuerbare Klemmvorrichtungen (42) aufweist, wobei jede wahlweise mit einem Halteorgan (32) eines Halters (26) für ein Werkzeug (6) oder die mit zwei Halteorganen (32) eines Halters (27) für ein Werkstück kuppelbar ist bzw. sind, wobei außerdem jeder Halter (26) für ein Werkzeug ein Halteorgan (32) und der Halter (27) für ein Werkstück zwei Halteorgane (32) aufweist.

2. Werkzeugmaschine mit Magazin und Übergabevorrichtung nach Anspruch 1, dadurch gekennzeichnet, daß die beiden Klemmvorrichtungen (42) des Greifers (41) nach entgegengesetzten Richtungen weisen.

3. Werkzeugmaschine mit Magazin und Übergabevorrichtung nach Anspruch 1 oder 2, dadurch gekennzeichnet, daß der Halter (26) übereinander je eine Greifvorrichtung (30, 31) für einen Stempel (3) und eine Matrize (5) aufweist.

4. Werkzeugmaschine mit Magazin und Übergabevorrichtung nach wenigstens einem der vorhergehenden Ansprüche, dadurch gekennzeichnet, daß die Werkzeuglagerplätze (25) auf Kreisbögen (28) um die Übergabevorrichtung (13) angeordnet sind.

5. Werkzeugmaschine mit Magazin und Übergabevorrichtung nach wenigstens einem der vorhergehenden Ansprüche mit einer höhenverstellbaren Übergabevorrichtung (13), dadurch gekennzeichnet, daß die Werkzeuglagerplätze (25) übereinander angeordnet sind.

6. Werkzeugmaschine mit Magazin und Übergabevorrichtung nach wenigstens einem der vorhergehenden Ansprüche, dadurch gekennzeichnet, daß der Halter (27) für die Werkstücke mit Haltegliedern für ein Werkstück, insbesondere mit Magneten (35) oder Saugern (34), versehen ist.

7. Werkzeugmaschine mit Magazin und Übergabevorrichtung nach Anspruch 6, dadurch gekennzeichnet, daß für die Verbindung der Sauger (34) oder Magnete (35) mit einer Energiequelle der Halter (27) und der Greifer (41) je ein Kupplungsstück (39, 40) einer Kupplung aufweisen und die Energiequelle, insbesondere durch die Steuereinrichtung (14) der Bearbeitungsmaschine (1), steuerbar ist.

8. Werkzeugmaschine mit Magazin und Übergabevorrichtung nach wenigstens einem der vorhergehenden Ansprüche, dadurch gekennzeichnet, daß die Dreheinstellung des Greifers (41) mit den Klemmvorrichtungen (42) um die Achse (24), insbesondere durch die Steuereinrichtung (14) der Bearbeitungsmaschine (1), steuerbar ist.

## Claims

1. A machine tool with a stationary magazine (43) for tools and a transfer device (13) incorporated between the magazine and the machine tool, each tool (6) being adapted to be transported from the magazine to a tool holder (2, 4) of the machine tool and back, this tool change taking place under control, the machine tool being furthermore provided with a tool holder (46) while the transfer device (13) comprises a programme-controllable arm (15) which is rotatable at least about a vertical axis (22) and which carries at its free end a gripper (41) which can be optionally associated with the magazine (43) or the tool holder (2, 4) and at least one workpiece bearing place (44, 45) or workpiece holder (46), characterised in that the machine tool is a stamping machine and in that each tool (6) is in a holder (26) and in that furthermore the gripper (41) on the arm (15) is rotatable about an axis (24) parallel with its axis (22) of rotation and has at least two controllable clamping devices (42), each being capable of being coupled optionally to a supporting member (32) of a holder (26) for a tool (6) or to two holding members (32) of a holder (27) for one workpiece, each holder (26) for a tool being in addition provided with a holding member (22) while the holder (27) has two holding members (32) for a workpiece.

2. A machine tool with a magazine and a transfer device according to claim 1, characterised in that the two clamping devices (42) of the gripper (41) point in opposite directions.

3. A machine tool with a magazine and a transfer device according to claim 1 or 2, characterised in that the holder (26) has, one above the other, gripper devices (30, 31) for a male die part (3) and a female die part (5).

4. A machine tool with a magazine and a transfer device according to at least one of the preceding claims, characterised in that the tool bearing places (25) are disposed on arcs (28) around the transfer device (13).

5. A machine tool with a magazine and a transfer device according to at least one of the preceding claims, with a vertically adjustable transfer device (13), characterised in that the tool bearing places (25) are disposed on above another.

6. A machine tool with a magazine and a transfer device according to at least one of the preceding claims, characterised in that the holder (27) for the workpieces is provided with retaining members for a workpiece, particularly with magnets (35) or suction means (34).

7. A machine tool with a magazine and a transfer device according to claim 6, characterised in that for connection of the suction means (34) or magnets (35) to an energy source the holder (27) and the gripper (41) each have a coupling member (39, 40) of a coupling the energy source being controllable, particularly by the control means (14) of the machine (1).

8. A machine tool with a magazine and a transfer device according to at least one of the preceding claims, characterised in that the rotary setting of the gripper (41) with the clamping devices (42) about the axis (24) can be controlled particularly by the control means (14) of the machine (1).

## Revendications

1. Machine-outil munie d'un magasin fixe (43) pour outils, et d'un dispositif de transfert (13), qui est interposé entre le magasin et la machine-outil, chaque outil (6) pouvant être transporté du magasin à un porte-outil (2, 4) de la machine-outil, et inversement, et ce changement d'outil se déroulant de façon commandée, la machine-outil étant par ailleurs munie d'un porte-pièces (46), et le dispositif de transfert (13) présentant un bras (15) pouvant être commandé par programme et pouvant tourner au moins autour d'un axe vertical, le bras (15) étant muni à son extrémité libre d'une pince (41) qui peut être adjointe au choix au magasin (43), ou au porte-outil (2, 4), et au moins à l'un des magasins à pièces (44, 45) ou au porte-pièce (46), caractérisée en ce que la machine-outil est une machine à estamper et que chaque outil (6) se trouve dans une monture (26), en ce que, par ailleurs, la pince (41) peut tourner sur le bras (15) autour d'un axe (24) parallèle à son axe de rotation (22), et présente, au moins, deux dispositifs de blocage (42) pouvant être commandés, chaque dispositif de blocage pouvant être accouplé, au choix, avec un organe de retenue (32) d'une monture (26) pour un outil (6), ou aux organes de retenue (32) d'une monture (27) pour un outil, chaque monture (26) pour un outil et la monture (27) pour un outil présentant respectivement un organe de retenue (32) et deux organes de retenue (32).

2. Machine-outil avec magasin et dispositif de transfert, selon la revendication 1, caractérisée en ce que les deux dispositifs de blocage (42) de la pince (41) s'étendent en directions opposées.

3. Machine-outil avec magasin et dispositif de transfert selon la revendication 1 ou 2, caractérisée en ce que la monture (26) présente, l'un au-dessus de l'autre, un dispositif preneur (30, 31) pour un poinçon (3) et un autre pour une matrice (5).

4. Machine-outil avec magasin et dispositif de transfert selon au moins une des revendications précédentes, caractérisée en ce que les emplacements de stockage d'outil (25) sont disposés sur des arcs de cercle (28) autour du dispositif de transfert (13).

5. Machine-outil avec magasin et dispositif de transfert selon au moins une des revendications précédentes avec un dispositif de transfert (13) réglable en hauteur, caractérisé en ce que les emplacements de stockage d'outil (25) sont disposés les uns au-dessus des autres.

6. Machine-outil avec magasin et dispositif de transfert, selon au moins une des revendications précédentes, caractérisée en ce que la monture (27) pour les pièces est munie d'organes de retenue pour une pièce, en particulier d'aimants (35) ou de ventouses (34).

7. Machine-outil avec magasin et dispositif de transfert, selon la revendication 6, caractérisée en ce que pour la liaison des ventouses (34) ou des aimants (35) avec une source d'énergie, la monture (27) et la pince (41) présentent chacune une pièce d'accouplement (39, 40) d'un accouplement et en ce que la source d'énergie peut être commandée en particulier par le dispositif de commande (14) de la machine d'usinage (1).

8. Machine-outil avec magasin et dispositif de transfert selon au moins une des revendications précédentes, caractérisée en ce que le réglage de rotation de la pince (41), avec les dispositifs de blocage (42) autour de l'axe (24) peut être commandé, en particulier, par le dispositif de commande (14) de la machine d'usinage (1).

Fig. 1

EP 0 128 487 B2

Fig. 2

Fig. 3

Fig. 4

Fig. 5

Fig. 6